# FASCICULE DE BREVET EUROPEEN

(11) **EP 4 519 933 B1**
(45) Date de publication et mention de la délivrance du brevet: **08.07.2026**
(21) Numéro de dépôt: 23724279.7
(22) Date de dépôt: 03.05.2023
(51) Int. Cl.: H01M 14/00

(54) **GENERATEUR D'ELECTRICITE A BASE DE FIBRES AMYLOÏDES**
AMYLOIDFASERBASIERTER STROMGENERATOR
AMYLOID FIBER-BASED ELECTRICITY GENERATOR

(30) Priorité: 03.05.2022 FR 2204201
(43) Date de publication de la demande: 12.03.2025
(73) Titulaire: Commissariat à l'Energie Atomique et aux Energies Alternatives, 75015 Paris (FR); UNIVERSITE GRENOBLE ALPES, 38400 Saint Martin d'Hères (FR); Centre National de la Recherche Scientifique, 75016 Paris (FR)
(72) Inventeur: FORGE, Vincent, 38054 Grenoble Cedex (FR); CHAMPAVERT, Joffrey, 38054 Grenoble Cedex (FR); HURTAUD, Julien, 38054 Grenoble Cedex (FR); RANNOU, Patrice, 38402 Saint-Martin-d'Hères Cedex (FR)
(74) Mandataire: Ipsilon
(86) Numéro de dépôt international: PCT/EP2023/061720
(87) Numéro de publication internationale: WO 2023/213907

(56) Documents cités:
- WO-A1-2020/069523
- RONGIER ANAËLLE: "Auto-assemblage de protéines pour la bioélectronique : étude du tranport de charges dans les fibres amyloïdes", 13 February 2018 (2018-02-13), Grenoble, pages 5 - 172, XP093028744, Retrieved from the Internet <URL:https://theses.hal.science/tel-01835473v1/file/RONGIER_2018_diffusion.pdf> [retrieved on 20230303]

## Description

### Domaine technique

La présente invention concerne la génération d'énergie électrique. Plus précisément, il est décrit un dispositif comprenant des fils amyloïdes permettant de produire de l'énergie électrique à partir de l'humidité ambiante ou de toute atmosphère contenant de la vapeur d'eau, ainsi que son utilisation pour produire de l'énergie et son procédé de préparation.

### Technique antérieure

La demande énergétique, notamment d'énergie électrique, est de plus en plus importante, et il devient nécessaire de disposer de sources d'énergies renouvelables afin de réduire les impacts négatifs sur l'environnement liés à la consommation d'énergie fossile. L'eau, recouvrant 71 % de la surface de la Terre, représente le plus grand réservoir d'énergie au monde. L'eau capte environ 35 % de l'énergie solaire reçue par la Terre, ce qui correspond à 60 petawatts (10¹⁵ W) (Stephens et al., Nature Geosci 5, 691-696 (2012)).

De nombreux efforts ont été faits dans le but de récupérer de l'énergie à partir de l'eau sous différentes formes : les rivières et les océans, les marées ou bien encore les gouttes de pluie. La récupération d'énergie à partir de l'eau, l'hydroélectricité, se fait principalement avec la construction de barrages hydrauliques ou bien des usines marémotrices. Ces usines utilisent principalement des générateurs électromagnétiques qui sont lourds, volumineux et sont dépendants de l'apport en eau disponible.

Très récemment, l'hydrovoltaïque a été proposé comme moyen alternatif de produire de l'énergie électrique à partir de l'eau (Zhang et al., Nature Nanotech 13, 1109-1119 (2018)). Contrairement aux technologies actuelles qui récupèrent l'énergie cinétique (dans le cas des cours d'eau et rivières) ou potentiel (dans le cas des bassins et des lacs) de l'eau, la technologie hydrovoltaïque permet de générer directement de l'énergie à partir de l'interaction directe entre l'eau et le matériau. Cependant, l'hydrovoltaïque développé jusqu'ici utilise principalement des matériaux inorganiques. Les matériaux actuellement utilisés sont réalisés à partir de nanofils de silicium, d'hydroxyde de Ni/Al ou bien encore à partir du carbone (graphène ou nanotubes de carbones) (Yang et al. (2018) J. Am. Chem. Soc. 140, 13746-13752; Tang et al., (2016), Angew. Chem. Int. Ed. 55, 14412-14416; Yin et al., (2014), Nat. Commun. 5, 3582 ; Xu et al., Nature 578, 392-396 (2020)).

L'eau se trouvant sous forme de vapeur dans l'atmosphère ambiante pourrait aussi être utilisée pour récupérer de l'énergie.

Il a été rapporté une production d'énergie à partir de l'humidité ambiante avec des matériaux biologiques (Liu et al., Nature 578, 550-554 (2020) ; WO 2020/069523).

Cependant, ce dispositif, composé de bionanofils issus de *Geobacter sulfurreducens,* doit être exposé à un gradient de vapeur d'eau pour produire de l'énergie. Ces filaments ne résultent pas d'un autoassemblage, mais requièrent la machinerie interne de la bactérie pour leur formation. De plus, les bionanofils utilisés sont issus d'une protéine recombinante nécessitant l'utilisation d'*Escherichia coli* comme support pour leur production ; c'est un verrou important pour une production en masse et une industrialisation à grande échelle du procédé.

Rongier (2018, thèse intitulée « Auto-assemblage de protéines pour la bioéléctronique : Etude du transport de charges dans les fibres amyloïdes », soutenue publiquement le 13 février 2018) décrit un processus de transport de charges intrinsèques dans des fibres amyloïdes composées de protéines HET-s (218-289), dans lequel des canaux d'eau formés au sein des fibres permettraient le transport de protons par un mécanisme de type Grotthuss. Toutefois, ce document ne décrit pas que de telles fibres amyloïdes sont aptes à générer une énergie électrique lorsqu'elles sont placées dans une atmosphère humide.

Il existe un besoin de disposer d'un matériau permettant de générer de l'énergie électrique à partir d'une atmosphère environnante humide qui soit d'un faible coût et qui puisse être aisément obtenu, notamment à l'échelle industrielle.

Il existe également un besoin de disposer d'un tel matériau qui soit biodégradable et renouvelable.

Il existe également un besoin de disposer d'un tel matériau permettant de produire une quantité d'énergie électrique modulable en fonction du taux d'humidité relative dans l'atmosphère environnante.

Il existe également un besoin de disposer d'un tel matériau permettant de réaliser différentes configurations électriques.

Il existe également un besoin de disposer d'un matériau capable d'alimenter en énergie électrique différents appareils électriques ou électroniques en générant une énergie électrique à partir d'une atmosphère environnante humide.

La présente invention a pour objet de satisfaire à tout ou partie de ces besoins.

### Exposé de l'invention

L'invention concerne un matériau comprenant des fibres amyloïdes conductrices d'ions hydroniums et permettant d'exploiter la source potentielle d'énergie que constitue l'atmosphère environnante humide pour générer une énergie électrique. L'invention concerne également un dispositif comprenant un tel matériau et configuré pour produire une énergie électrique, ainsi que l'utilisation d'au moins une fibre amyloïde ou d'au moins un tel matériau, tels que décrits ici, pour générer une énergie électrique à partir de vapeur d'eau, i.e. par contact d'au moins une portion de la fibre avec une atmosphère humide environnante. Le matériau décrit ici est composé de protéines hiérarchiquement auto-assemblées en fibres amyloïdes. Ces fibres peuvent être assemblées en fils. Ce matériau, composé ou constitué de fibres amyloïdes, permet, lorsqu'inséré entre deux électrodes, de produire une énergie électrique à partir de l'humidité de l'atmosphère environnante.

Avantageusement, un tel matériau est complétement biodégradable et est renouvelable. Un tel matériau permet ainsi de produire une énergie verte, à faible coût et modulable en fonction du taux d'humidité ambiante.

Selon un autre de ses avantages, un matériau de fibres amyloïdes peut être obtenu de manière peu coûteuse, par exemple à partir de l'α-lactalbumine (α-LAC), qui est un sous-produit des produits laitiers et peut être obtenue à l'échelle industrielle.

Avantageusement, un matériau de fibres amyloïdes présente l'avantage, comparé à des matériaux inorganiques, d'être biodégradable, non toxique, et biocompatible.

Selon un autre de ses avantages, un matériau de fibres amyloïdes permet d'obtenir une différence de potentiel à humidité ambiante (60 %) et à très haute humidité permettant ainsi d'ajuster la tension obtenue et de la moduler jusqu'à une valeur cible.

Selon un autre de ses avantages, un matériau de fibres amyloïdes peut présenter une grande résistance interne (~ 100 MΩ (megaohms)). Dans un dispositif de génération d'énergie électrique comprenant des fils de fibres amyloïdes, la résistance peut être modulable à façon en faisant varier le nombre de fils qui peuvent être mises en série ou en parallèle.

Selon un autre de ses avantages, un matériau de fibres amyloïdes peut présenter une grande stabilité.

### Résumé de l'invention

La présente invention concerne une utilisation d'au moins une fibre amyloïde, ou d'au moins un fil comprenant une pluralité de fibres amyloïdes, pour générer une énergie électrique à partir d'une atmosphère environnante humide.

Par « fibre », on entend désigner une structure dont la dimension longitudinale est significativement supérieure à la dimension latérale. Par « fil » on entend désigner un assemblage de fibres.

Par « fibre amyloïde », on entend désigner une fibre comprenant des protéines structurées en feuillets-β (bêta) et qui s'organisent en une fibre insoluble. La fibre peut être constituée entièrement de protéines structurées en feuillets-β (bêta), ou être essentiellement constituée de protéines structurées en feuillets-β (bêta), i.e. en quantité suffisante pour conférer à la fibre les propriétés d'une fibre amyloïde.

Par « générer une énergie électrique à partir d'une atmosphère environnante humide » on entend, au sens de l'invention, désigner la capacité d'une fibre amyloïde telle que décrite ici, de réagir avec au moins une partie de la vapeur d'eau, ou humidité, contenue dans l'atmosphère environnante, i.e. en contact avec, et générer une énergie électrique. La teneur en vapeur d'eau d'une telle atmosphère est suffisante pour permettre la génération d'ions hydronium. Les ions hydronium peuvent circuler le long de la fibre amyloïde. Une teneur en vapeur d'eau suffisante peut varier d'environ 30% à environ 100%.

Par « énergie électrique » on entend désigner l'énergie potentielle d'une charge électrique dans un champ électrique ou un courant électrique dans un champ magnétique. L'énergie électrique générée lors d'une utilisation, selon l'invention, d'une fibre amyloïde ou d'un fil de fibres amyloïdes est une différence de potentielle qui se crée entre les extrémités de la fibre ou du fil. Cette différence de potentielle peut être utilisée pour générer un courant électrique.

Selon un de ses aspects, la présente invention concerne une utilisation d'au moins une fibre amyloïde conductrice d'ions hydroniums, ou d'au moins un fil comprenant une pluralité de fibres amyloïdes conductrices d'ions hydroniums, pour générer une énergie électrique à partir d'une atmosphère environnante humide.

Par « ion hydronium », on entend désigner le cation H₃O⁺ issu de la protonation d'une molécule d'eau.

Par fibre « conductrice d'ions hydronium », on entend désigner la capacité d'une fibre à assurer une conduction de type ionique et protonique permettant le déplacement d'ions hydronium ou de protons dans sa direction longitudinale.

Comme détaillé dans la section Exemples, les inventeurs ont observé, de manière surprenante, que des fibres amyloïdes exposées à une atmosphère humide étaient capables de générer une différence de potentiel électrique entre ses deux extrémités. En effet, il a été observé qu'un fil composé de fibres amyloïdes, notamment d'α-lactalbumine, obtenu par formation et séchage d'un hydrogel généré, par exemple, par chauffage en pH d'acide de protéines α-lactalbumine, inséré entre deux électrodes et exposé à une atmosphère humide était apte à générer une différence de potentiel et ainsi produire une énergie électrique. L'énergie électrique ainsi produite a permis d'alimenter et de charger un condensateur.

Les expériences ont été réalisées avec une atmosphère environnante ayant une humidité relative (RH) de 95 %. Une telle humidité relative permet la génération d'un signal électrique de manière rapide et facile. Néanmoins, il est possible de faire fonctionner un dispositif tel que décrit ici à plus basse humidité (40 %).

Selon un mode de réalisation une fibre ou un fil, tels que décrits ici, peut être électriquement connecté à une première et à une seconde électrode.

Selon un autre de ces aspects la présente invention concerne un dispositif de production d'énergie électrique comprenant :
a) au moins une fibre amyloïde conductrice d'ions hydroniums, ou au moins un fil comprenant une pluralité de fibres amyloïdes conductrices d'ions hydroniums,
b) au moins une paire d'électrodes comprenant une première électrode et une seconde électrode, lesdites électrodes étant électriquement connectées à ladite fibre ou audit fil,

ladite fibre ou ledit fil étant destiné à, ou configuré pour, être exposé, au moins partiellement, à une atmosphère environnante humide.

Par « atmosphère environnante humide » on entend désigner une atmosphère en contact avec tout ou partie d'une fibre amyloïde ou d'un fil composé de fibres amyloïdes et comprenant des molécules d'eau à l'état de vapeur. La teneur en vapeur d'eau d'une telle atmosphère est suffisante pour permettre la génération et la conduction d'ions hydronium dans ces fibres ou fils. Une teneur en vapeur d'eau suffisante peut varier d'environ 0.1 à environ 100%, par exemple d'environ 1% à environ 99%, par exemple d'environ 2% à environ 98%, par exemple d'environ 5 à environ 95%, par exemple d'environ 10 à environ 90%, par exemple d'environ 20 à environ 80%, par exemple d'environ 30 à environ 70%, par exemple d'environ 40 à environ 60%.

La paire d'électrodes (ou les électrodes) d'un dispositif tel que décrit ici est configurée pour être connectée à un appareil électrique ou électronique destiné à (ou configuré pour) être alimenté en énergie électrique.

Selon une variante de réalisation, un dispositif tel que décrit ici peut comprendre une pluralité de paires de première et seconde électrodes, chacune desdites paires d'électrodes étant électriquement connectée à un fil ou à une pluralité, au moins 2, 3, 4, 5, 6, 7, 8, 9, 10, 20, 30, 40, 50, 60, 70, 80, 90, 100, 200, 500, 1000, ou plus, de fils. Lorsqu'une paire d'électrodes est connectée à une pluralité de fils, ceux-ci sont électriquement connectés en parallèle.

Un dispositif tel que décrit ici peut comprendre une pluralité de paires de première et deuxième électrodes. Ces paires d'électrodes peuvent être électriquement reliées entre elles en série ou en parallèle.

Selon une variante de réalisation, une utilisation ou un dispositif, tel que décrit ici, peut mettre en œuvre une fibre amyloïde composée de protéines choisies parmi l'α-lactalbumine, la β-lactoglobuline, le lysozyme, ou la protéine HET-s.

Les fibres et fils amyloïdes décrits ici sont constituées de protéines structurées en feuillet-β et autoassemblées.

Selon une variante de réalisation, une utilisation ou un dispositif, tel que décrit ici, peut mettre en œuvre un fil ayant un diamètre d'environ 300 µm à environ 700 µm, en particulier d'environ 500 µm.

Selon une variante de réalisation, une utilisation ou un dispositif, tel que décrit ici, peut mettre en œuvre un fil ayant une longueur d'environ 0,5 mm à environ 2,5 mm, en particulier d'environ 1,0 à environ 1,5 mm.

Selon une variante de réalisation, une utilisation ou dispositif, tels que décrits ici, peut mettre en œuvre une première et seconde électrode, la première et/ou la seconde électrode étant une électrode d'or, d'argent, de platine, d'aluminium ou de carbone.

Selon un autre de ses aspects, la présente invention concerne l'utilisation d'un dispositif, tel que décrit ici, pour alimenter en énergie électrique un appareil électrique ou électronique destiné à, ou configuré pour, être alimenté en énergie électrique.

Selon un autre de ses aspects, la présente invention concerne un procédé pour alimenter en énergie électrique un appareil électrique ou électronique destiné à, ou configuré pour, être alimenté en énergie électrique, le procédé comprenant au moins une étape consistant à exposer à une atmosphère environnante humide, au moins partiellement, au moins une fibre amyloïde conductrice d'ions hydroniums, ou au moins un fil de telles fibres, ladite fibre ou ledit fil étant disposé dans un dispositif de production d'énergie électrique tel que décrit ici, ledit dispositif étant électriquement connecté audit appareil électrique.

Selon un autre de ses aspects, la présente invention concerne un procédé pour alimenter en énergie électrique un appareil électrique ou électronique destiné à, ou configuré pour, être alimenté en énergie électrique, le procédé comprenant au moins les étapes consistant à :
a) connecter électriquement un dispositif, tel que décrit ici, à un appareil électrique ou électronique destiné à être alimenté en énergie électrique, et
b) exposer, au moins partiellement, ladite fibre ou ledit fil à une atmosphère environnante humide.

Selon un autre de ses aspects, la présente invention concerne un procédé de fabrication d'un dispositif, tel que décrit ici, comprenant au moins les étapes consistant à :
a) mettre en contact un hydrogel de fibres amyloïdes avec une paire d'électrodes comprenant une première et une seconde électrodes pour connecter électriquement lesdites électrodes avec l'hydrogel, et
b) sécher l'hydrogel pour obtenir un fil de fibres amyloïdes connecté électriquement auxdites électrodes.

Par « hydrogel de fibres amyloïdes » on entend designer un réseau tridimensionnel de chaînes de protéines structurées en feuillets-β (bêta), et contenant de l'eau.

Selon un autre de ses aspects, la présente invention concerne un procédé de fabrication d'un dispositif, tel que décrit ici, comprenant au moins l'étape consistant à sécher un hydrogel de fibres amyloïdes mis en contact avec une première et une seconde électrode d'une paire d'électrodes pour obtenir un fil de fibres amyloïdes connecté électriquement auxdites électrodes.

Selon un autre de ses aspects, la présente invention concerne un procédé de fabrication d'un dispositif, tel que décrit ici, comprenant au moins les étapes consistant à :
- mettre en contact un hydrogel de fibres amyloïdes avec une première et une seconde électrode d'une paire d'électrodes pour connecter électriquement lesdites électrodes avec l'hydrogel, et
- sécher l'hydrogel de fibres amyloïdes pour obtenir un fil de fibres amyloïdes connecté électriquement auxdites électrodes.

Selon un autre de ses aspects, la présente invention concerne un procédé de fabrication d'un dispositif, tel que décrit ici, comprenant au moins les étapes consistant à :
- préparer un hydrogel de fibres amyloïdes par solubilisation de protéines aptes à s'autoassembler en fibres amyloïdes, en une teneur variant d'au moins 5 g/L à la limite de solubilité, dans une solution saline acide de pH variant d'environ 1,5 à environ 2,5, puis chauffage de la solution obtenue à une température variant d'environ 35 à 55°C, pendant une durée d'au moins 10 heures,
- mettre en contact l'hydrogel de fibres amyloïdes préparé à l'étape a) avec une première et une seconde électrode d'une paire d'électrode pour connecter électriquement lesdites électrodes avec l'hydrogel, et
- sécher l'hydrogel pour obtenir un fil de fibres amyloïde connecté électriquement auxdites électrodes.

Selon un autre de ses aspects, la présente invention concerne un appareil électrique ou électronique alimenté en énergie électrique par un dispositif tel que décrit ici.

Selon un autre de ses aspects, la présente invention concerne un capteur d'humidité comprenant au moins un dispositif, tel que décrit ici.

Selon un autre de ses aspects, la présente invention concerne un coupe circuit électrique réactif à l'humidité comprenant au moins un dispositif, tel que décrit ici.

Selon un autre de ses aspects, la présente invention concerne un chargeur électrique comprenant au moins un dispositif, tel que décrit ici.

Ces objets, caractéristiques et avantages ainsi que d'autres aspects de la présente invention seront exposés en détail dans la description suivante.

### Brève description des dessins

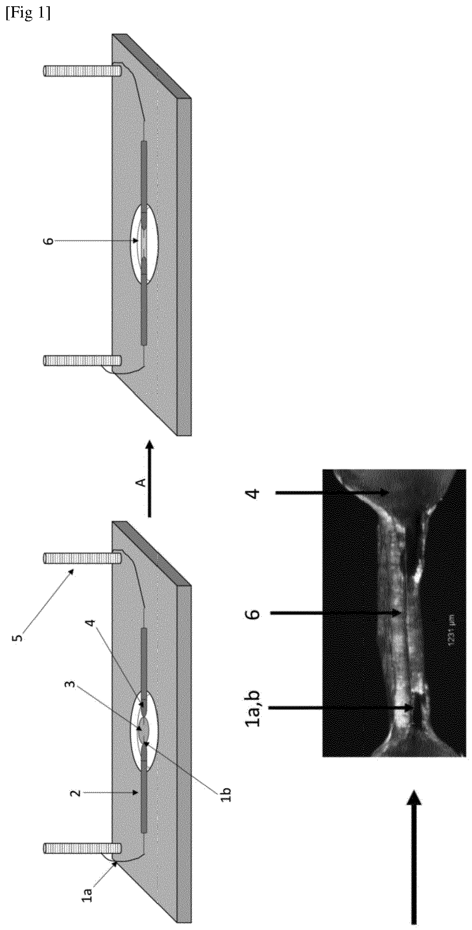

[Fig 1] représente un schéma de réalisation de fils amyloïdes d'α-lactalbumine configurés pour la récupération d'énergie à partir de l'humidité ambiante. Des fils amyloïdes d'α-lactalbumine (6) sont disposés entre, et connectés à, deux fils de platine (1a,b). Les fils de platine sont reliés à des vis (5) permettant la connexion à un circuit électrique et sont disposés dans des capillaires en verre (2). L'extrémité de chacun des capillaires de verre (2) tournée vers les fils d'α-lactalbumine (6) est obturée par de la cire d'abeille (4). Les fils amyloïdes d'α-lactalbumine (6) sont obtenus à partir d'une goutte de gel de fibres amyloïdes d'α-lactalbumine (3) disposée entre les fils de platine (1a,b) et laissée séchée pendant 1 à 3 heures (A).
[Fig 2] représente des schémas de montage des circuits en parallèles (2A) et en séries (2B) dans lesquels chacun des Gᵢ-Zᵢ représente un dispositif comprenant des fils amyloïdes reliés à des électrodes de platines, comme décrit ici.

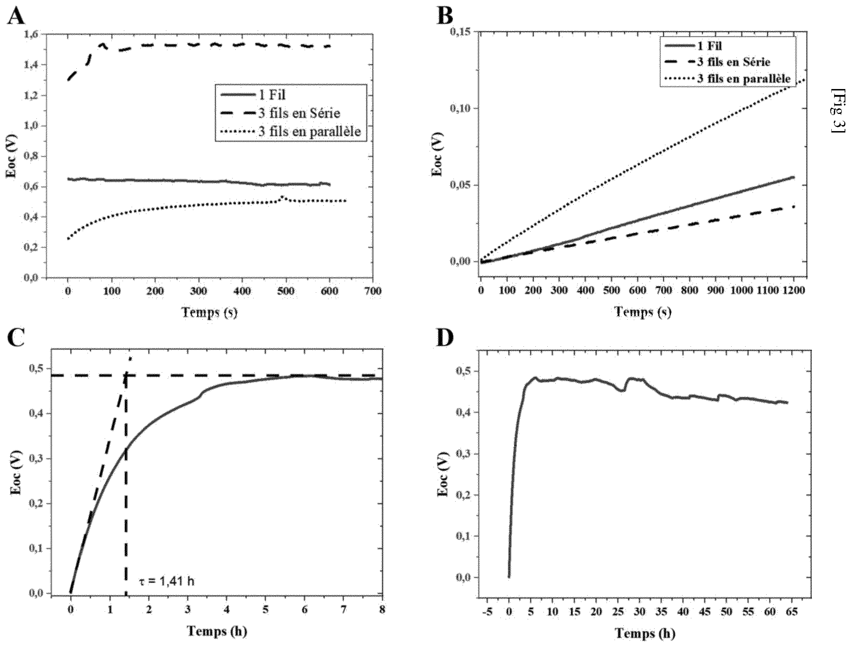

[Fig. 3] représente la caractérisation électronique des fils amyloïdes d'α-lactalbumine. (3A) représente les différences de potentiels en circuit ouvert (E_{oc} (V)) obtenues en fonction de la configuration des fils : fil seul (noir plein), 3 fils en séries (noir traits) et 3 fils en parallèles (noir pointillés). (3B) : Charge d'un condensateur 470 µF 16 V en fonction de la configuration des fils : fil seul (noir plein), 3 fils en séries (noir traits) et 3 fils en parallèles (noir pointillés). (3C) : Charge d'un condensateur 470 µF 16 V avec 3 fils en parallèles et détermination de la constante de temps. (3D) : Stabilité de la charge d'un condensateur sur une période de 50 h.
[Fig. 4] représente l'évolution du potentiel en circuit ouvert (E(V)) sur deux fils amyloïdes d'α-lactalbumine en fonction de l'humidité : à 95 % et 60 % et l'influence du sens de branchement sur les électrodes démontrant une polarisation des fils amyloïdes de protéines d'α-lactalbumine.
[Fig. 5] représente (5A) un schéma de montage d'une plaque sur laquelle des électrodes (5B) (7a, 7b) ont été imprimées. Les électrodes portent à leur extrémité de la cire (8). Une goutte d'un hydrogel de fibres amyloïdes est déposée et laissée sécher (E).

### Description détaillée

### Fibres et fils amyloïdes de protéines

La présente divulgation concerne l'utilisation d'au moins une fibre amyloïde, ou d'au moins un fil comprenant une pluralité de fibres amyloïdes, pour générer une énergie électrique à partir d'une atmosphère environnante humide.

La présente divulgation concerne l'utilisation d'au moins une fibre amyloïde conductrice d'ions hydroniums, ou d'au moins un fil comprenant une pluralité de fibres amyloïdes conductrices d'ions hydroniums, pour générer une énergie électrique à partir d'une atmosphère environnante humide.

De nombreuses protéines sont capables de s'autoassembler en fibres amyloïdes. Certaines protéines assemblées en fibres amyloïdes sont toxiques et sont impliquées dans des processus pathologiques chez l'homme, tel que le peptide β-amyloïde (bêta-amyloïde) impliqué dans la maladie d'Alzheimer ou l'α-synucléine impliquée dans la maladie de Parkinson.

Par exemple, les protéines aptes à s'autoassembler en fibres amyloïdes et mises en œuvre dans l'invention sont des protéines non-toxiques. Une « protéine non-toxique » est une protéine non impliquée dans un processus pathologique chez l'homme ou l'animal. Des protéines non-toxiques aptes à s'autoassembler en fibres amyloïdes sont connues dans le domaine (Jackson et al., Biomolecules. 2017;7(4):71 ; Lee et al., Sci Rep 10, 5120 (2020) ; Roberts (2016) PLoS Biol 14(1)).

Les protéines convenant à l'invention sont des protéines aptes à former des, ou s'autoassembler en, fibres amyloïdes conductrices d'ions hydronium.

À titre d'exemple de protéines susceptibles d'être mises en œuvre dans la présente description, on peut citer l'α-lactalbumine, la β-lactoglobuline, le lysozyme, ou la protéine HET-s issue du champignon filamenteux *Podospora anserina,* et notamment le domaine HET-s(218-289).

Selon un mode de réalisation, une protéine apte à s'autoassembler en fibres amyloïdes n'est pas la protéine HET-s issue du champignon filamenteux *Podospora anserina,* ou son domaine HET-s(218-289).

Les protéines convenant à l'invention peuvent être obtenues par toute méthode connue dans le domaine, telle que l'extraction à partir d'une source biologique exprimant naturellement cette protéine ou sous forme de protéines recombinantes obtenues par expression hétérologue dans une cellule hôte, par exemple *Escherichia coli* ou les cellules CHO, et amplification de la cellule hôte dans un bio-incubateur. Les protéines recombinantes ainsi obtenues sont ensuite purifiées par toute méthode connue dans le domaine.

Selon un mode de réalisation, une protéine convenant à l'invention est l'α-lactalbumine.

L'α-lactalbumine est un sous-produit des produits laitiers, qui est produite à l'échelle industrielle dans l'industrie fromagère et peut être obtenue à faible coût. Cette protéine est présente dans le lactosérum ou petit-lait.

L'α-lactalbumine peut être extraite à l'état de monomère, à partir du lactosérum. Elle est présente dans le lait de vache à raison de 1,2 g/L. Alternativement, elle peut être produite sous-forme de protéine recombinante.

Les fibres amyloïdes sont des nanostructures fibrillaires très stables formées par autoassemblage de protéines organisées en feuillets-β. Les mécanismes de formation des fibres amyloïdes suivent un processus de nucléation-élongation. Ainsi, une protéine acquiert une structure secondaire riche en brins-β qui s'associent via des liaisons hydrogène pour former des feuillets-β. Les sous-unités protéiques s'autoassemblent par empilements successifs perpendiculairement à l'axe d'élongation de la fibre. La structure est stabilisée par un réseau dense de liaisons-H ayant une orientation parallèle à l'axe fibrillaire.

La formation de fibres amyloïdes peut être dépendante de différents paramètres tel le pH, la force ionique du tampon, la concentration de protéines, la présence d'autres molécules, la température, ou la vitesse d'agitation qui peuvent conduire à des cinétiques de fibrillation et organisations différentes. Il relève de la pratique de l'homme de l'art d'adapter les conditions opératoires selon la nature des protéines utilisées.

Les fibres amyloïdes peuvent être obtenus sous forme d'un hydrogel de fibres de protéines préparé comme décrit dans WO 2012/136909.

Un hydrogel de fibres amyloïdes, notamment d'α-lactalbumine, peut être préparé en utilisant une solution aqueuse comprenant au moins environ 5 g/L de protéines. La concentration de protéines dans une solution aqueuse peut varier d'environ 5 g/L à la limite de solubilité de la protéine dans la solution. Par exemple, la concentration de protéine dans la solution peut varier d'environ 10 g/L à environ 60 g/L, d'environ 20 g/L à environ 50 g/L, et être, par exemple, d'environ 40 g/L. La concentration d'une protéine dans une solution destinée à préparer un hydrogel de fibres amyloïdes peut être d'environ 5, 6, 7, 8, 9, 10, 11, 12, 13, 14, 15, 20, 22, 24, 26, 28, 30, 35, 40, 45, 50, 55, ou environ 60 g/L.

Selon un mode de réalisation, une solution aqueuse d'α-lactalbumine destinée à préparer un hydrogel de fibres amyloïdes peut comprendre environ 40 g/L de protéines.

Selon un mode de réalisation, une solution aqueuse de protéines destinée à préparer un hydrogel de fibres amyloïdes peut être une solution saline. Une solution aqueuse convenant à la présente divulgation peut présenter une force ionique inférieure ou égale à environ 60 mM, par exemple inférieure à environ 50 mM, voire étant environ de 30 mM.

La force ionique d'une solution aqueuse de protéines mise en œuvre pour la préparation d'un hydrogel de fibres amyloïdes peut varier d'environ 0 mM à environ 60 mM, par exemple d'environ 20 mM à environ 50 mM, et par exemple être à environ 30 mM. La force ionique d'une solution aqueuse de protéines pour la préparation d'un hydrogel de fibres amyloïdes peut être d'environ 0, 1, 2, 3, 4, 5, 6, 7, 8, 9, 10, 12, 14, 16, 18, 20, 25, 30, 35, 40, 45, 50, 55, ou d'environ 60 mM.

La force ionique peut être obtenue et/ou ajustée par ajout d'un sel pouvant être choisi parmi les halogénures de métal alcalin ou alcalinoterreux, tels que par exemple NaCl, KC1, MgCl₂, CaCl₂, ... ; les carbonates de métal alcalin ou alcalinoterreux ou leur mélange ; les phosphates, tels que par exemple le phosphate de sodium ou de potassium ou encore les sulfates tels que par exemple, le sulfate de sodium ou de magnésium.

Selon un mode de réalisation, la force ionique d'une solution aqueuse de protéines pour la préparation d'un hydrogel de fibres amyloïdes, par exemple une solution aqueuse d'α-lactalbumine, peut être ajustée par ajout de NaCl.

Selon un mode de réalisation, la force ionique d'une solution aqueuse de protéines pour la préparation d'un hydrogel de fibres amyloïdes, par exemple une solution aqueuse d'α-lactalbumine peut être environ de 30 mM.

Le pH d'une solution aqueuse de protéines pour la préparation d'un hydrogel de fibres amyloïdes peut être un pH acide. Par exemple, le pH peut être inférieur à 3. Par exemple, le pH d'une solution aqueuse de protéines pour la préparation d'un hydrogel de fibres amyloïdes peut varier d'environ 1,0 à environ 2,9, par exemple d'environ 1,5 à environ 2,5, voire d'environ 1,8 à environ 2,2, voire encore peut être à environ 2,0. Le pH d'une solution aqueuse de protéines pour la préparation d'un hydrogel de fibres amyloïdes peut être d'environ 1,0, 1,1, 1,2, 1,3, 1,4, 1,5, 1,6, 1,7, 1,8, 1,9, 2,0, 2,2, 2,4, 2,6, 2,8, 3,0, 3,2 ou d'environ 3,5. Le pH d'une solution aqueuse de protéines pour la préparation d'un hydrogel de fibres amyloïdes peut être d'environ 1,5, 1,6, 1,7, 1,8, 1,9, 2,0, 2,1, 2,2, 2,3, 2,4, ou d'environ 2,5. Le pH d'une solution aqueuse de protéines pour la préparation d'un hydrogel de fibres amyloïdes peut être inférieur à 2.5. Le pH acide de la solution aqueuse peut être ajusté au moyen d'un acide fort, par exemple HCl.

Selon un mode de réalisation, une solution aqueuse de protéines pour la préparation d'un hydrogel de fibres amyloïdes, par exemple d'α-lactalbumine, peut présenter un pH d'environ 2,0.

Le pH acide de la solution aqueuse est ajusté avant addition et solubilisation de la protéine.

La préparation d'une solution aqueuse de protéines pour la préparation d'un hydrogel de fibres amyloïdes peut comprendre une étape d'agitation. Une telle étape d'agitation peut se faire par agitation, au moyen de tout dispositif connu dans le domaine.

La préparation d'une solution aqueuse de protéines pour la préparation d'un hydrogel de fibres amyloïdes peut comprendre une étape de chauffage, par exemple à une température variant d'environ 35°C à environ 55°C.

L'étape de chauffage et l'étape d'agitation peuvent être effectuées simultanément.

La préparation d'une solution aqueuse de protéines pour la préparation d'un hydrogel de fibres amyloïdes peut comprendre une étape de filtration. L'étape de filtration peut être effectuée avant l'étape de chauffage.

Une solution aqueuse de protéines pour la préparation d'un hydrogel de fibres amyloïdes, de pH acide, par exemple inférieur à 2,5, et de force ionique inférieure à 60 mM, peut être soumise à une étape de chauffage, sous agitation.

Avant l'étape de chauffage, la solution aqueuse de protéines pour la préparation d'un hydrogel de fibres amyloïdes peut être filtrée. La filtration peut être par exemple réalisée avec un filtre 0.5 µm ou 0.22 µm pour purifier la solution, et éliminer d'éventuels contaminants.

L'étape de chauffage est réalisée à une température permettant la structuration en feuillets-β des protéines en solution aqueuse acide. L'étape de chauffage est réalisée à une température inférieure à 60°C. Par exemple la température de chauffage peut être comprise dans une plage variant d'environ 35°C à environ 55°C, et être par exemple d'environ 45°C. L'étape de chauffage peut être réalisée à une température d'environ 35, 36, 37, 38, 39, 40, 41, 42, ,43, 44, 45, 46, 47, 48, 49, 50, 55, ou 60°C.

L'étape de chauffage peut durer au moins 10 heures, voire une semaine (ou 168 heures). Par exemple, l'étape de chauffage peur durer de 48h à 96h. L'étape de chauffage peut durer d'environ au moins 10 à environ au moins 168h, d'environ au moins 15h à au moins 150h, d'environ au moins 20h à au moins 125h, d'environ au moins 25h à au moins 115h, d'environ au moins 30h à au moins 105h, d'environ au moins 40h à au moins 100h, ou encore d'environ au moins 48h à au moins 96h.

L'étape de chauffage est effectuée sous agitation. Une agitation convenant à la présente divulgation peut présenter une intensité définie par un nombre de Reynolds compris dans une plage variant de 37 à environ 1000, par exemple d'environ 40 à environ 950, d'environ 60 à environ 900, d'environ 80 à environ 850, d'environ 100 à environ 800, d'environ 200 à environ 600, ou encore d'environ 300 à environ 500.

Selon un mode de réalisation, un procédé de préparation d'un hydrogel de fibres amyloïdes peut comprendre au moins les étapes consistant à : solubiliser des protéines aptes à s'autoassembler en fibres amyloïdes, en une teneur variant d'au moins 5 g/L à la limite de solubilité, dans une solution saline acide de pH variant d'environ 1,5 à 2,5, puis chauffer la solution obtenue à une température variant d'environ 35 à 55°C, pendant une durée d'au moins 10 heures.

Par exemple, un procédé de préparation d'un hydrogel comprenant des fibres de protéines peut comprendre au moins les étapes consistant à :
- solubiliser dans une solution acide une protéine apte à s'autoassembler en fibres amyloïdes en une concentration variant d'environ 5 g/L à environ la limite de solubilité, la solution acide présentant un pH inférieur à environ 2,5 et une force ionique inférieure à 60 mM,
- éventuellement ajuster le pH de la solution aqueuse de protéines à un pH compris dans une plage variant d'environ 1,5 à environ 2,5,
- chauffer, sous agitation, la solution obtenue à une température comprise dans une plage variant d'environ 35°C à environ 55°C, pendant une durée d'au moins 10 heures.

Un procédé de préparation d'un hydrogel est réalisé, par exemple, en l'absence d'évaporation d'eau.

L'hydrogel obtenu comprend des fibres amyloïdes de protéines.

Les fils de fibres amyloïdes (ou fils amyloïdes) peuvent être obtenus par dépôt et séchage d'un volume donné d'hydrogel, comprenant des fibres amyloïdes, mis en contact avec une pointe d'une première électrode et une pointe d'une seconde électrode, la première et la seconde électrodes constituant une paire d'électrodes. Le séchage de l'hydrogel peut être effectué à température et atmosphère ambiante.

La paire d'électrodes peut être disposée à la surface de matériaux de nature et de forme variées. Le choix de la nature et de la forme des matériaux destinés à supporter les électrodes est ajusté par l'homme de l'art selon l'usage qui sera fait des électrodes. À titre de matériau utilisable, il est possible de citer les polymères ou résines plastiques, les matières vitreuses, ou les tissus.

Par séchage, la goutte d'hydrogel comprenant des fibres amyloïdes va former un fil composé de fibres amyloïdes.

Si besoin, le séchage de l'hydrogel peut être réalisé par chauffage pour être accéléré. Alternativement, le séchage de l'hydrogel peut être réalisé sous pression atmosphérique réduite. Des moyens de chauffage et d'obtention d'une pression atmosphérique réduite peuvent le cas échéant être combinés pour sécher l'hydrogel et obtenir des fils de fibres de protéines amyloïdes.

Lors de la mise en œuvre des fibres ou fils amyloïdes pour générer une énergie électrique, ceux-ci peuvent être imprégnés d'une solution tampon, par exemple une solution aqueuse de NaCl, par exemple une solution aqueuse de NaCl à 10 mM. L'imprégnation des fibres ou fils amyloïdes avec une telle solution permet avantageusement de réduire la répulsion électrostatique entre les fibres amyloïdes et de réduire le risque de fissures longitudinales dans le fil.

Le volume d'hydrogel à utiliser pour préparer des fils de fibres amyloïdes peut varier selon les dimensions du fil ou des fils à préparer, et de la concentration en protéines.

Le volume d'hydrogel à utiliser peut varier d'environ 10 µL à environ 50 µL, par exemple d'environ 15 µL à environ 30 µL, et par exemple être d'environ 20 µL. Le volume d'hydrogel à utiliser peut être d'environ 10 µL, ou d'environ 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, ou d'environ 50 µL.

Les fils de fibres amyloïdes susceptibles d'être obtenus peuvent présenter une longueur variant d'environ 0,5 à environ 2,5 mm, par exemple d'environ 1,0 à environ 2,0 mm, voire être d'environ 1,5 mm. Les fils de fibres amyloïdes peuvent présenter une longueur d'environ 0,5 mm, ou d'environ 0,6, 0,7, 0,8, 0,9, 1,0, 1,1, 1,2, 1,3, 1,4, ou d'environ 1,5 mm.

Les fils de fibres amyloïdes susceptibles d'être obtenus peuvent présenter un diamètre variant d'environ 300 µm à environ 700 µm, par exemple d'environ 400 µm à environ 600 µm, voire être d'environ 500 µm. Les fils de fibres amyloïdes peuvent présenter un diamètre d'environ 300 µm, ou d'environ 350, 400, 450, 500, 550, 600, 650 ou d'environ 700 µm.

Par exemple, des fils de fibres amyloïdes d'a-lactalbumine peuvent être réalisés à partir d'un hydrogel obtenu comme décrit ici et comprenant environ 40 g/L en protéines. Un volume d'environ 15 à environ 20 µL, par exemple environ 17 µL, d'hydrogel peut être déposé entre les pointes d'une première et d'une seconde électrodes d'une paire d'électrodes. Un tel volume peut permettre d'obtenir des fils mesurant d'environ 1,0 à environ 1,5 mm de long pour environ 500 µm de diamètre.

Comme détaillé dans les exemples ci-après, les fibres et fils amyloïdes sont capables de générer une énergie électrique lorsqu'ils sont placés dans une atmosphère environnante humide.

Les fibres amyloïdes objets de la présente description sont aptes à générer des charges de type ionique et protonique : l'ion hydronium (H₃O⁺ ou encore H⁺aq) à partir de l'humidité de l'atmosphère environnante, et à les faire circuler. Sans vouloir être lié par une quelconque théorie, il est proposé que les ions peuvent pénétrer dans les fibres soit par leurs terminaisons finales soit par leurs faces latérales et être guidés le long de l'axe des fibres. Également, il est proposé que les protons puissent se déplacer dans les canaux d'eau des fibres amyloïdes. Lorsque les canaux sont remplis, les protons pourraient se déplacer par saut, de proche en proche dans un réseau de liaisons hydrogène, via le mécanisme de Grothuss.

Du fait de la nature protonique du transport de charge, la conduction des fibres amyloïdes dépend de l'humidité ambiante et donc du remplissage des canaux avec de l'eau.

Selon un mode de réalisation, les fibres ou fils amyloïdes décrits ici sont exposés (mis en contact), au moins partiellement, à une atmosphère environnante humide, c'est-à-dire contenant de la vapeur d'eau, en quantité suffisante, pour générer une énergie électrique.

Une atmosphère environnante humide peut comprendre une teneur en humidité relative d'au moins 10% à au moins 95%, par exemple d'au moins environ 20% à au moins 80%, voire d'au moins 30% à au moins 70%, ou encore d'au moins 40% à au moins 60%. L'humidité relative d'une atmosphère peut être mesurée par toutes méthodes connues, par exemple au moyen d'un hygromètre.

Lorsque l'humidité de l'atmosphère environnante varie, l'intensité de l'énergie électrique générée par les fibres ou fils amyloïdes varie en conséquence. Cette propriété peut être mise à profit, par exemple, dans des capteurs d'humidité ou des coupe-circuits électriques réagissant à l'humidité.

### Dispositif comprenant des fibres ou fils amyloïdes

Selon un mode de réalisation, pour pouvoir capter et utiliser l'énergie électrique générées par les fibres ou fils amyloïdes, ceux-ci peuvent être connectés électriquement à des électrodes.

Une fibre ou un fil amyloïde peut être connecté électriquement à une première et à une seconde électrode. La première électrode est connectée électriquement, par exemple via une pointe de cette électrode, à un premier point de la fibre ou du fil, et la seconde électrode est connectée électriquement, par exemple via une pointe de cette électrode, à un second point de la fibre ou du fil. La première et la seconde électrode peuvent former une paire d'électrodes.

Selon un mode de réalisation, la présente divulgation concerne un dispositif de production d'énergie électrique comprenant :
a) au moins une fibre amyloïde conductrice d'ions hydroniums, ou au moins un fil comprenant une pluralité de fibres amyloïdes conductrices d'ions hydroniums,
b) au moins une paire d'électrodes comprenant une première électrode et une seconde électrode, lesdites électrodes étant électriquement connectées à ladite fibre ou audit fil,
ladite fibre ou ledit fil étant destiné à (ou configuré pour) être exposé, au moins partiellement, à une atmosphère environnante humide.

La première et seconde électrodes peuvent être recouvertes partiellement d'un matériau hydrophobe. Le matériau hydrophobe peut être en contact avec les fibres ou le fil de fibres amyloïdes. Les fibres ou le fil de fibres amyloïdes sont en contact, directement, avec le matériau constituant l'électrode.

Un dispositif tel que décrit ici peut être fabriqué par un procédé comprenant au moins l'étape consistant à sécher un hydrogel de fibres amyloïdes mis en contact avec une première et une seconde électrode d'une paire d'électrodes pour obtenir un fil de fibres amyloïdes connecté électriquement auxdites électrodes.

Un dispositif tel que décrit ici peut être préparé par un procédé comprenant au moins les étapes consistant à :
- mettre en contact un hydrogel de fibres amyloïdes avec une première et une seconde électrode d'une paire d'électrodes pour connecter électriquement lesdites électrodes avec l'hydrogel, et
- sécher l'hydrogel de fibres amyloïdes pour obtenir un fil de fibres amyloïdes connecté électriquement auxdites électrodes.

Un dispositif tel que décrit ici peut être préparé par un procédé comprenant au moins les étapes consistant à :
- préparer un hydrogel de fibres amyloïdes par solubilisation de protéines aptes à s'autoassembler en fibres amyloïdes, en une teneur variant d'au moins 5 g/L à la limite de solubilité, dans une solution saline acide de pH variant d'environ 1,5 à environ 2,5, puis chauffage de la solution obtenue à une température variant d'environ 35 à 55°C, pendant une durée d'au moins 10 heures,
- mettre en contact l'hydrogel de fibres amyloïdes préparé à l'étape a) avec une première et une seconde électrode d'une paire d'électrode pour connecter électriquement lesdites électrodes avec l'hydrogel, et
- sécher l'hydrogel pour obtenir un fil de fibres amyloïde connecté électriquement auxdites électrodes.

Un volume déterminé, comme indiqué précédemment, d'hydrogel de fibres amyloïdes est disposé entre deux pointes entre une première et une seconde électrode de sorte que l'hydrogel soit en contact avec les électrodes. Il est ainsi possible d'assurer que le fil amyloïde qui est obtenu après séchage de l'hydrogel soit connecté électriquement aux électrodes.

Les électrodes sont disposées de sorte à être en contact, chacune, à un point du fil. Une première électrode est en contact avec un premier point du fil, et une seconde électrode est en contact avec un second point du fil.

Un fil ou une fibre amyloïde comprend une première extrémité et une seconde extrémité. Selon un mode de réalisation, une première électrode peut être en connectée électriquement, par exemple par une pointe, avec une première extrémité du fil ou de la fibre, et une seconde électrode peut être connectée électriquement, par exemple par une pointe, avec une seconde extrémité dudit fil ou de ladite fibre.

Préalablement au dépôt d'une goutte d'hydrogel de fibres amyloïdes entre deux électrodes d'une paire d'électrode, une portion de l'électrode destinée à être en contact avec la goutte d'hydrogel peut être recouverte d'un matériau hydrophobe et imperméable destiné à assurer le maintien de la goutte d'hydrogel lors de son dépôt et de son séchage.

Un matériau hydrophobe et imperméable susceptible de convenir peut être une cire ou une gomme. Une cire peut être une cire animale, une cire végétale ou encore une cire de synthèse comme la paraffine. Une cire peut être une cire d'abeille. Une gomme peut être la gomme arabique.

Le matériau hydrophobe peut être disposé à la surface de l'électrode par toute méthode connue dans le domaine, par exemple par dépôt ou par trempage de l'électrode dans un bain de matériau hydrophobe, puis séchage, par exemple à température ambiante ou par chauffage.

Le matériau hydrophobe est disposé à la surface de l'électrode de sorte à permettre à la goutte d'hydrogel d'être en contact avec l'électrode et le matériau hydrophobe.

Après dépôt, la goutte d'hydrogel est en contact avec l'électrode et le matériau hydrophobe. Le contact entre la goutte et le matériau permet de stabiliser la goutte dans sa position entre la première et la seconde électrodes pendant son séchage.

Après séchage de la goutte d'hydrogel de fibres amyloïdes, le fil amyloïde obtenu est stablement fixé aux première et seconde électrodes. Le matériau hydrophobe peut être éliminé ou conservé sur l'électrode.

La première et/ou la seconde électrodes peuvent être choisies parmi des électrodes d'or, d'argent, de platine, d'aluminium ou de carbone, de cuivre, de fer, d'acier, de bronze, ou de mercure.

Par exemple, la première et/ou la seconde électrodes peuvent être choisies parmi des électrodes d'or, d'argent, de platine, d'aluminium ou de carbone.

L'intensité de l'énergie électrique générée par un dispositif tel que décrit ici peut dépendre de la teneur en humidité de l'atmosphère environnante en contact avec la fibre ou le fil amyloïde. Également, l'intensité peut dépendre du nombre de fibres ou de fils présents dans un dispositif.

Selon un mode de réalisation, un dispositif tel que décrit peut comprendre une pluralité de fils chacun connecté électriquement à une première et à une seconde électrode.

Selon un mode de réalisation, un dispositif peut comprendre une pluralité de fils amyloïdes disposés en parallèle.

Selon un autre mode de réalisation, un dispositif peut comprendre une pluralité de fils amyloïdes disposés en série.

Selon une variante de réalisation, un dispositif tel que décrit ici peut comprendre une pluralité de paires de première et seconde électrodes, chacune desdites paires d'électrodes étant électriquement connectée à un fil ou à une pluralité, au moins 2, 3, 4, 5, 6, 7, 8, 9, 10, 20, 30, 40, 50, 60, 70, 80, 90, 100, 200, 500, 1000, ou plus, de fils. Dans une telle réalisation, les fils sont alors électriquement connectés en parallèle.

Un dispositif tel que décrit ici peut comprendre une pluralité de paires de première et deuxième électrodes. Ces paires d'électrodes peuvent être électriquement reliées entre elles en série ou en parallèle.

Selon une variante de réalisation, un dispositif tel que décrit ici peut comprendre une paire de première et deuxième électrodes, ou une pluralité, au moins 2, 3, 4, 5, 6, 7, 8, 9, 10, 20, 30, 40, 50, 60, 70, 80, 90, 100, 200, 500, 1000, ou plus, de paires de première et deuxième électrodes, chaque paire de première et deuxième électrodes étant électriquement connectée à un fil, ou une pluralité de fils, au moins 2, 3, 4, 5, 6, 7, 8, 9, 10, 20, 30, 40, 50, 60, 70, 80, 90, 100, 200, 500, 1000, ou plus, tel(s) que décrit ici. Lorsque au moins deux, ou plus, paires d'électrodes sont présentes, celles-ci peuvent être électriquement reliées entre elles en série ou en parallèle.

Une architecture en parallèle permet avantageusement une diminution de la résistance interne.

Une architecture en série permet avantageusement d'augmenter le potentiel de charge du circuit à plusieurs volts. Également, une architecture en série permet d'avoir une résistance interne élevée et de pouvoir concevoir et réaliser, à façon, un dispositif avec une résistance finale bien définie.

Selon un mode de réalisation, un dispositif peut comprendre une pluralité de fils amyloïdes disposés en parallèle et une pluralité de fils amyloïdes disposés en en série.

Selon un mode de réalisation, un dispositif peut comprendre une pluralité de paires d'électrodes électriquement connectées à un ou une pluralité de fils amyloïdes et disposées en parallèle et une pluralité de paires d'électrodes électriquement connectées à un ou une pluralité de fils amyloïdes et disposées en série.

La pluralité de fils ou de paires d'électrodes peut être disposée de sorte à former une configuration plane, bidimensionnelle, ou une configuration tridimensionnelle.

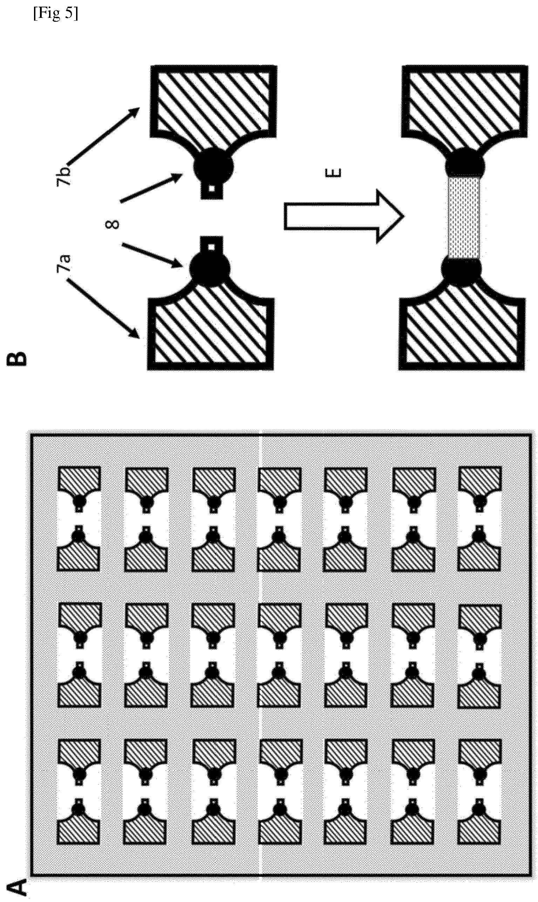

Selon un mode de réalisation, illustré par la Figure 5, une pluralité de paires d'électrodes peut être disposée sur un support, par exemple par impression 3D ou par lithographie. Préalablement au dépôt d'une goutte d'hydrogel de fibres amyloïdes entre la première et la seconde électrodes de chaque paire d'électrodes, une portion de la surface de chaque électrode peut être recouverte d'un matériau hydrophobe, par exemple une cire. Une goutte d'hydrogel peut ensuite être déposée entre la première et la seconde électrodes de chaque paire d'électrode. Les paires d'électrodes peuvent ensuite être reliées entre elles en série et/ou en parallèle.

Selon un mode de réalisation, un dispositif comprend au moins une fibre ou au moins un fil amyloïde disposé de sorte à ce qu'au moins 50%, par exemple au moins 60%, au moins 70%, au moins 80%, au moins 90% voire 100% de la longueur de la fibre ou du fil soit exposée à l'atmosphère environnante humide.

Un dispositif tel que décrit ici peut être un dispositif de fourniture d'énergie électrique, par exemple une batterie.

### Utilisations des fibres et fils amyloïdes

Les fibres ou les fils amyloïdes décrits ici, ainsi que les dispositifs décrits ici, peuvent être mis en œuvre dans une atmosphère environnante humide pour générer une énergie électrique. L'énergie électrique ainsi obtenue peut être destinée à alimenter différents appareils électriques ou électroniques.

Un dispositif tel que décrit ici peut être utilisé pour alimenter en énergie électrique un appareil électrique ou électronique destiné à être alimenté en énergie électrique.

Il est décrit ici un procédé pour alimenter en énergie électrique un appareil électrique ou électronique destiné à, ou configuré pour, être alimenté en énergie électrique. Un tel procédé peut comprendre au moins une étape consistant à exposer à une atmosphère environnante humide, au moins partiellement, au moins une fibre amyloïde conductrice d'ions hydroniums, ou au moins un fil de telles fibres, ladite fibre ou ledit fil étant disposé dans un dispositif de production d'énergie électrique tel que décrit ici, ledit dispositif étant électriquement connecté audit appareil électrique ou électronique.

Selon un autre mode de réalisation, la présente divulgation concerne un procédé pour alimenter en énergie électrique un appareil électrique ou électronique destiné à être alimenté en énergie électrique, le procédé comprenant au moins les étapes consistant à :
a) connecter électriquement un dispositif tel que décrit à un appareil électrique ou électronique destiné à être alimenté en énergie électrique, et
b) exposer, au moins partiellement, ladite fibre ou ledit fil à une atmosphère environnante humide.

Un dispositif décrit ici peut avantageusement être mis en œuvre dans une zone à forte humidité, par exemple un milieu marin, pour recharger de petits appareils électriques ou électroniques, de type smartphones, capteurs, par exemple capteurs d'humidité, balises, chargeurs électriques, ou lampes

Selon un mode de réalisation, la présente divulgation concerne un capteur d'humidité, un coupe circuit électrique réactif à l'humidité, ou un chargeur électrique comprenant au moins un dispositif tel que décrit ici.

Les termes « environ » ou « approximativement » signifient une erreur de mesure acceptable pour une valeur particulière d'un paramètre déterminée par les méthodes de mesure habituelles dans le domaine et qui dépendra en partie de la façon dont la valeur est mesurée ou déterminée, c'est-à-dire des limites du système de mesure. Par exemple, « environ » peut signifier dans une plage de trois ou plus de trois écarts-types, selon la pratique de l'art. Alternativement, « environ » peut signifier une plage allant jusqu'à 20%, par exemple jusqu'à 10%, par exemple jusqu'à 5%, et encore jusqu'à 1% d'une valeur donnée.

Le terme « comprendre » doit être interprété comme spécifiant la présence des caractéristiques, des nombres entiers, des étapes ou des composants indiqués, mais n'excluant pas la présence d'une ou plusieurs autres caractéristiques, nombres entiers, étapes ou composants, ou d'un groupe de ceux-ci. Il peut également spécifier strictement les caractéristiques, nombres entiers, étapes ou composants indiqués et, dans ce cas, il peut être remplacé par « consiste en ».

La liste des sources et composants décrits ici est énumérée de telle sorte que les combinaisons et les mélanges de ceux-ci sont également envisagés et entrent dans le champ d'application de la présente divulgation.

Il doit être entendu que chaque limite numérique maximale indiquée inclut chaque limite numérique inférieure, comme si ces limites numériques inférieures étaient expressément mentionnées. Chaque limite numérique minimale indiquée comprend chaque limite numérique supérieure, comme si ces limites numériques supérieures étaient expressément mentionnées. Chaque plage numérique comprend chaque plage numérique plus étroite qui se trouve dans une plage numérique plus large, comme si ces plages numériques plus étroites étaient toutes expressément écrites.

Toutes les listes d'items, sont destinées à être interprétées comme des groupes Markush et doivent l'être. Ainsi, toutes les listes peuvent être lues et interprétées comme des items « sélectionnés dans le groupe constitué de ... items ..., et de leurs combinaisons et mélanges ».

Les inventeurs n'ont pas l'intention d'être limités par des matériaux sous un nom commercial particulier. Des matériaux équivalents à ceux référencés par un nom commercial peuvent être substitués et utilisés dans les descriptions ci-incluses.

Il est entendu que la présente description englobe toutes les variations, combinaisons et permutations dans lesquelles au moins une limitation, un élément, une clause, un terme descriptif, etc., d'au moins une des revendications est introduit dans une autre revendication dépendante de la même revendication de base (ou, le cas échéant, dans toute autre revendication), sauf indication contraire ou s'il est évident pour un homme du métier qu'une contradiction ou une incohérence surviendrait. Lorsque des éléments sont présentés sous forme de listes, par exemple dans un groupe Markush ou sous une forme similaire, il est entendu que chaque sous-groupe d'éléments est également divulgué et que tout élément peut être retiré du groupe. Il doit être entendu qu'en général, lorsque la divulgation, ou des aspects de la divulgation, est/sont désignée(s) comme comprenant des éléments, caractéristiques, etc. particuliers, ils englobent également les modes de réalisations consistant en, ou consistant essentiellement en, de tels éléments, caractéristiques, etc. Dans un souci de simplicité et de concision, ces éléments n'ont pas toujours été spécifiquement exposés dans le présent document. Il convient également de comprendre que tout mode de réalisation ou tout aspect de la divulgation peut être explicitement exclu des revendications, que l'exclusion spécifique soit ou non mentionnée dans la description. Les publications et autres documents de référence mentionnés dans la description pour décrire le contexte d'invention et pour fournir des détails supplémentaires concernant sa mise en œuvre sont incorporés par référence

Sans limiter la présente description de l'invention, différents modes de réalisation de l'invention sont décrits ci-après à des fins d'illustration.

### Exemples

### Exemple 1 : Préparation d'un hydrogel de fibres amyloïdes

Un hydrogel de fibres amyloïdes est préparé comme décrit dans l'exemple 1 de la demande FR 2 973 648 A1 ou l'exemple 2 de WO 2012/136909.

La protéine purifiée, une α-lactalbumine : « α-Lactalbumin from bovine milk Type III, calcium depleted, >85% » (α-LAC) vendue sous la référence catalogue « L6010 » commercialisée par Sigma, est lyophilisée et suspendue dans une solution aqueuse d'HCl contenant ou non du NaCl.

La concentration d'HCl dépend de la concentration finale d'α-LAC. Elle est calculée en mM en ajoutant 10 à la valeur numérique de la concentration souhaitée en α-LAC. Par exemple, si on souhaite se placer à 40 mg/mL d'α-LAC, la concentration d'HCl pour la mettre en suspension sera de 40 + 10 = 50 mM.

Tout d'abord, il faut préparer la solution d'HCl à la concentration déterminée puis y ajouter du NaCl entre 0 et 60 mM. Dans les hydrogels utilisés pour obtenir les fils amyloïdes utilisés dans les Exemples, une concentration de HCl 10 mM a été mise en œuvre. Ensuite, il faut peser la quantité d'α-LAC nécessaire. Cette quantité dépend de la concentration finale de protéine et du volume de gel à préparer. Les concentrations en α -LAC utilisées s'étendent de 5 g/L à la limite de solubilité. Dans les hydrogels utilisés pour obtenir les fils amyloïdes utilisés dans les Exemples, une concentration de 40 g/L en α-LAC a été mise en œuvre.

La protéine est dissoute dans le volume défini de solution d'HCl puis le pH est ajusté à 2,0 +/- 0,1 avec quelques microlitres d'HCl 1M. La solution est placée sous agitation magnétique à l'aide d'un barreau aimanté et incubée sur la nuit à une température d'environ 45°C. Le lendemain, soit environ 16h plus tard, le gel est formé.

### Exemple 2 : Préparation du dispositif de récupération d'énergie

Afin de récupérer de l'énergie électrique à partir de l'humidité ambiante, des fils d'α-LAC sont réalisés entre les extrémités de 2 fils de platine.

Pour ce faire, 17 µL de la solution d'hydrogel sont déposés entre les extrémités des deux fils de platine (Thermo Fischer (ALFA AESAR) : 0263). Ces deux fils de platine sont insérés dans un capillaire de verre (VWR (microcaps) : DRUM1-000-0090) et l'ensemble est trempé dans de la cire d'abeille afin de permettre le maintien d'une goutte entre les pointes. Le fil de platine est ajusté et coupé afin qu'il n'y ait aucun résidu de cire sur les fils. La goutte est ensuite laissée à sécher à température et humidité ambiantes quelques heures, par exemple entre 1 et 3 heures (Fig. 1).

Après dépôt, la goutte d'hydrogel de fibres amyloïdes est en contact avec la cire. Le contact avec la cire permet de stabiliser et de maintenir la goutte d'hydrogel entre les pointes des électrodes pendant le séchage. Après dépôt, la goutte d'hydrogel est en contact avec les électrodes de platine et la cire.

Lors du séchage de la goutte d'hydrogel des fils amyloïdes, du fait de la répulsion électrostatique entre les fibres, ceux-ci peuvent se fendre dans le sens de la longueur. Dans le but d'obtenir des fils plus résistants, et réduire le risque de fissure longitudinale, les fils d'amyloïdes sont imprégnés d'une solution de 10 mM de NaCl.

L'alimentation en humidité du dispositif est assurée en le plaçant dans une enceinte climatique ClimaCell 11, pilotée par le logiciel Warmcomm software.

### Exemple 3 : Caractérisations électroniques des fils d'α-LAC

Les caractérisations électroniques des fils d'α-LAC ont été réalisées avec un potentiostat Biologic SP-200 et sa sonde bas-courant. Le contrôle de l'humidité a été réalisé via une enceinte climatique ClimaCell 11, pilotée par le logiciel Warmcomm software.

Du fait de la nature chimique des fibres amyloïdes, le transport de charges dont elles sont le siège est de type ionique et protonique, l'ion hydronium (H₃O⁺ ou encore H⁺aq) étant un ion particulier. Les ions vont pénétrer dans les fibres soit par leurs terminaisons finales soit par leurs faces latérales et seront ainsi guidés le long de leur axe. Un autre mécanisme est mis en jeu dans le cas du transfert de protons. En effet, les fibres amyloïdes possèdent des canaux d'eau. Lorsque les canaux sont remplis, les protons se déplacent par sauts (de proche en proche dans un réseau de liaisons hydrogène) via le mécanisme de Grothuss (Rongier, 2016).

Du fait de la nature protonique du transport de charge, la conduction des fibres amyloïdes dépend intrinsèquement de l'humidité ambiante et donc du remplissage des canaux d'eau. Pour ces raisons, nous avons étudié la possibilité de la présence d'une différence de potentiel entre les électrodes. Les fils de protéines sont placés dans l'enceinte climatique à haute humidité (95 %) et la différence de potentiel en circuit ouvert entre les deux fils de platine a été enregistrée.

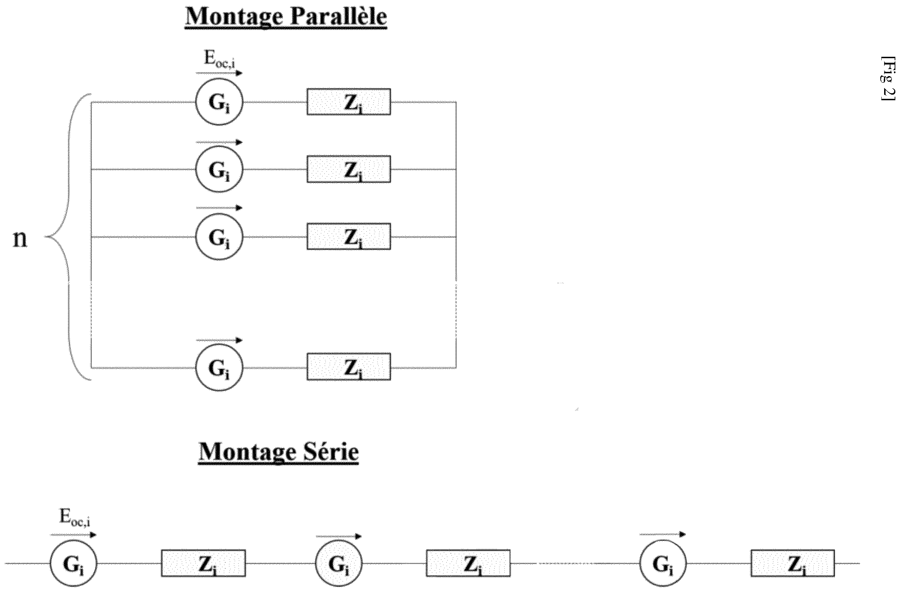

Trois configurations ont été testées : un seul fil, trois fils en parallèle et trois fils en série (Figure 2). Pour les circuits en parallèle et en série, les caractéristiques liées au potentiel et à la résistance interne sont mentionnées sur la Fig. 2.

Le potentiel en circuit ouvert (E_{oc} (V)) a été étudié pour ces trois configurations typiques différentes (Fig. 2) à une humidité relative de 95 % : un seul fil seul, trois fils mis en séries et ces trois mêmes fils mis en parallèle (Fig. 3 (A)). Les E_{oc} observées pour les trois fils testés (un seul représenté) sont : 615 mV, 595 mV et 510 mV. Lorsque ces fils sont mis en série, une E_{oc} de 1,52 V est obtenue (contre 1,72 V théoriquement atteignable, c'est-à-dire la somme des trois E_{oc}). Enfin lorsque ces 3 mêmes fils sont mis en parallèle, l'E_{oc} est de 550 mV, comme attendu pour un montage en parallèle.

Un condensateur de capacité 470 µF et tension 16 V a été chargé selon les trois configurations décrites précédemment (Fig. 3 (B)). Entre chaque test, le condensateur est déchargé sur une résistance jusqu'à obtenir une tension nulle. On peut constater que les pentes de charge du condensateur varient en fonction du circuit. Ces pentes sont directement liées à la résistance interne des fils car τ = RC (constante de temps du circuit). Ainsi, lorsque nous avons 3 fils en série, la charge est plus lente puisque les résistances internes s'ajoutent. Ainsi la meilleure configuration possible est obtenue pour les fils disposés en parallèle puisque, dans ce cas, la résistance interne diminue. Le condensateur a donc été chargé avec les trois fils en parallèle afin d'en déterminer son temps de charge (Fig. 3 (C)). Ainsi le condensateur atteint une tension limite de 490 mV au bout de 5,5 h. Cette valeur est inférieure à la valeur théorique (550 mV) de l'E_{oc} des 3 fils en parallèle. Cela peut être dû à la perte de stabilité de l'E_{oc} des fils dans le temps. Lorsque l'on détermine la constante de temps τ de la charge du condensateur, on obtient une valeur de 1,41 h. Si l'on considère qu'un condensateur est chargé au bout de 4 τ, on retrouve bien une valeur de 5,5 h.

On peut aussi déterminer la résistance interne des fils disposés en parallèle qui est de 11,6 MΩ (megaohms). Le condensateur a par la suite été chargé pendant 50 h (Fig. 3 (D)). On peut noter des fluctuations au niveau du potentiel du condensateur. Ces fluctuations peuvent être dues aux fils d'α-lactalbumine dont le potentiel peut varier au cours du temps. En fin d'expérience, on peut observer une E_{oc} de 420 mV. L'E_{oc} des trois fils en parallèle a été mesurée en fin d'expérience : celle-ci est de 420 mV. Ceci confirme donc que les fluctuations de la charge sont liées à l'E_{oc} des fils.

### Exemple 4 : Influence de l'humidité relative sur l'Eoc

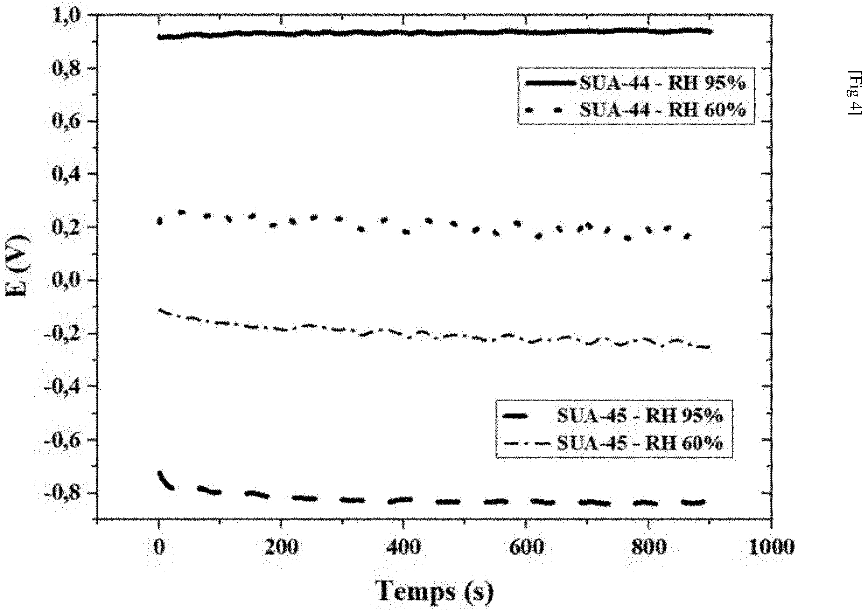

L'influence de l'humidité relative sur l'E_{oc} de deux fils a également été testée (Fig. 4). Les deux fils ont dans un premier temps été testés à 95 % et ensuite l'humidité relative (RH) de la Climacell a été descendue à 60 %. On peut constater que lorsque l'on diminue l'humidité relative, l'E_{oc} diminue d'un facteur 4 mais reste stable dans le temps (15 min). On peut aussi noter que lorsque l'on inverse les connexions aux bornes des fils de platine, la différence de potentiel devient négative, ce qui indique que les fils d'α-lactalbumine sont naturellement polarisés en présence de vapeur d'eau.

Les résultats obtenus aux exemples 2 à 4 démontrent la preuve de concept que des fils de fibres amyloïdes sont capables de recharger un condensateur seulement avec l'humidité ambiante.

### Liste des documents cités

Jackson MP, Hewitt EW. Why are Functional Amyloids Non-Toxic in Humans?. Biomolecules. 2017;7(4):71. Published 2017 Sep 22. doi:10.3390/biom7040071
Lee, S., Choi, M.C., Al Adem, K. et al. Aggregation and Cellular Toxicity of Pathogenic or Non-pathogenic Proteins. Sci Rep 10, 5120 (2020). https://doi.org/10.1038/s41598-020-62062-3
Liu, X., Gao, H., Ward, J.E. et al. Power generation from ambient humidity using protein nanowires. Nature 578, 550-554 (2020). https://doi.org/10.1038/s41586-020-2010-9
Roberts RG (2016) Good Amyloid, Bad Amyloid-What's the Difference? PLoS Biol 14(1): e1002362. https://doi.org/10.1371/journal.pbio.1002362
Roma N. Rambaran and Louise C. Serpell (2008), Amyloid fibrils Review, Prion, Vol 2 issue 3.
Rongier A. (2016) Thèse : « Auto-assemblage de protéines pour la bioéléctronique : Etude du transport de charges dans les fibres amyloïdes » Université Grenoble Alpes.
Stephens, G., Li, J., Wild, M. et al. An update on Earth's energy balance in light of the latest global observations. Nature Geosci 5, 691-696 (2012). https://doi.org/10.1038/ngeo1580
Tang, Q., Duan, Y., He, B., and Chen, H. (2016). Platinum Alloy Tailored All-Weather Solar Cells for Energy Harvesting from Sun and Rain. Angew. Chem. Int. Ed. 55, 14412-14416
WO 2012/136909 - Thixotropic α-lactalbumin hydrogels, methods for preparing same and uses thereof
Xu, W., Zheng, H., Liu, Y. et al. A droplet-based electricity generator with high instantaneous power density. Nature 578, 392-396 (2020). https://doi.org/10.1038/s41586-020-1985-6
Yang, S., Su, Y., Xu, Y., Wu, Q., Zhang, Y., Raschke, M.B., Ren, M., Chen, Y., Wang, J., Guo, W., et al. (2018). Mechanism of Electric Power Generation from Ionic Droplet Motion on Polymer Supported Graphene, J. Am. Chem. Soc. 140, 13746-13752.
Yin, J., Zhang, Z., Li, X., Yu, J., Zhou, J., Chen, Y., and Guo, W. (2014). Waving potential in graphene. Nat. Commun. 5, 3582.
Zhang, Z., Li, X., Yin, J. et al. Emerging hydrovoltaic technology. Nature Nanotech 13, 1109-1119 (2018). https://doi.org/10.1038/s41565-018-0228-6

## Revendications

1. Utilisation d'au moins une fibre amyloïde conductrice d'ions hydroniums, ou d'au moins un fil comprenant une pluralité de fibres amyloïdes conductrices d'ions hydroniums, pour générer une énergie électrique à partir d'une atmosphère environnante humide.

2. Utilisation selon la revendication 1, dans laquelle ladite fibre ou ledit fil est électriquement connecté à une première et à une seconde électrode.

3. Dispositif de production d'énergie électrique comprenant :
a) au moins une fibre amyloïde conductrice d'ions hydroniums, ou au moins un fil comprenant une pluralité de fibres amyloïdes conductrices d'ions hydroniums,
b) au moins une paire d'électrodes comprenant une première électrode et une seconde électrode, lesdites électrodes étant électriquement connectées à ladite fibre ou audit fil, ladite fibre ou ledit fil étant destiné à être exposé, au moins partiellement, à une atmosphère environnante humide.

4. Dispositif selon la revendication 3, comprenant une pluralité de paires de première et seconde électrodes, chacune desdites paires d'électrodes étant électriquement connectée à un fil ou à une pluralité de fils.

5. Dispositif selon la revendication 3 ou 4, dans lequel ladite fibre est composée de protéines choisies parmi l'α-lactalbumine, la β-lactoglobuline, le lysozyme, ou la protéine HET-s.

6. Dispositif selon l'une des revendications 3, 4 ou 5, dans lequel la première et/ou la seconde électrodes sont choisies parmi des électrodes d'or, d'argent, de platine, d'aluminium ou de carbone.

7. Utilisation selon la revendication 1 ou 2, dans laquelle ladite fibre est composée de protéines choisies parmi l'α-lactalbumine, la β-lactoglobuline, le lysozyme, ou la protéine HET-s.

8. Utilisation selon l'une des revendications 1, 2 ou 7, dans laquelle la première et/ou la seconde électrodes sont choisies parmi des électrodes d'or, d'argent, de platine, d'aluminium ou de carbone.

9. Utilisation d'un dispositif selon l'une des revendications 3 à 6, pour alimenter en énergie électrique un appareil électrique ou électronique destiné à être alimenté en énergie électrique.

10. Procédé pour alimenter en énergie électrique un appareil électrique ou électronique destiné à être alimenté en énergie électrique, le procédé comprenant au moins une étape consistant à exposer à une atmosphère environnante humide, au moins partiellement, au moins une fibre amyloïde conductrice d'ions hydroniums, ou au moins un fil comprenant une pluralité de fibres amyloïdes conductrices d'ions hydroniums, ladite fibre ou ledit fil étant disposé dans un dispositif de production d'énergie électrique selon l'une quelconque des revendications 3 à 6, ledit dispositif étant électriquement connecté audit appareil électrique.

11. Procédé de fabrication d'un dispositif selon l'une quelconque des revendications 3 à 6, comprenant au moins une étape consistant à sécher un hydrogel de fibres amyloïdes disposé entre une première et une seconde électrode d'une paire d'électrodes pour connecter électriquement lesdites électrodes avec l'hydrogel pour obtenir un fil de fibres amyloïdes connecté électriquement auxdites électrodes.

12. Capteur d'humidité, coupe circuit électrique réactif à l'humidité, ou chargeur électrique comprenant au moins un dispositif selon l'une des revendications 3 à 6.

## Patentansprüche

1. Verwendung von mindestens einer Amyloidfaser, die Hydroniumionen leitet, oder von mindestens einem Draht, der eine Vielzahl von Amyloidfasern umfasst, die Hydroniumionen leiten, zum Erzeugen von elektrischer Energie aus einer feuchten umgebenden Atmosphäre.

2. Verwendung nach Anspruch 1, wobei die Faser oder der Draht elektrisch mit einer ersten und mit einer zweiten Elektrode verbunden ist.

3. Vorrichtung zur Erzeugung von elektrischer Energie, umfassend:
a) mindestens eine Amyloidfaser, die Hydroniumionen leitet, oder mindestens einen Draht, der eine Vielzahl von Amyloidfasern umfasst, die Hydroniumionen leiten,
b) mindestens ein Paar von Elektroden, das eine erste Elektrode und eine zweite Elektrode umfasst, wobei die Elektroden elektrisch mit der Faser oder dem Draht verbunden sind,
wobei die Faser oder der Draht dafür vorgesehen ist, zumindest teilweise, mit einer feuchten umgebenden Atmosphäre in Kontakt zu kommen.

4. Vorrichtung nach Anspruch 3, die eine Vielzahl von Paaren aus einer ersten und zweiten Elektrode umfasst, wobei jedes von den Elektrodenpaaren elektrisch mit einem Draht oder einer Vielzahl von Drähten verbunden ist.

5. Vorrichtung nach Anspruch 3 oder 4, wobei die Faser aus Proteinen aufgebaut ist, die aus α-Lactalbumin, β-Lactoglobulin, Lysozym oder dem Protein HET-s ausgewählt sind.

6. Vorrichtung nach einem der Ansprüche 3, 4 oder 5, wobei die erste und/oder die zweite Elektrode aus Gold-, Silber-, Platin-, Aluminium- oder Kohlenstoffelektroden ausgewählt ist bzw. sind.

7. Verwendung nach Anspruch 1 oder 2, wobei die Faser aus Proteinen aufgebaut ist, die aus α-Lactalbumin, β-Lactoglobulin, Lysozym oder dem Protein HET-s ausgewählt sind.

8. Verwendung nach einem der Ansprüche 1, 2 oder 7, wobei die erste und/oder die zweite Elektrode aus Gold-, Silber-, Platin-, Aluminium- oder Kohlenstoffelektroden ausgewählt ist bzw. sind.

9. Verwendung einer Vorrichtung nach einem der Ansprüche 3 bis 6 zum Versorgen eines Elektrogeräts oder elektronischen Geräts, das mit elektrischer Energie versorgt werden soll, mit elektrischer Energie.

10. Verfahren zum Versorgen eines Elektrogeräts oder elektronischen Geräts, das mit elektrischer Energie versorgt werden soll, mit elektrischer Energie, wobei das Verfahren mindestens einen Schritt umfasst, der darin besteht, mindestens eine Amyloidfaser, die Hydroniumionen leitet, oder mindestens einen Draht, der eine Vielzahl von Amyloidfasern umfasst, die Hydroniumionen leiten, zumindest teilweise, mit einer feuchten umgebenden Atmosphäre in Kontakt zu bringen, wobei die Faser oder der Draht in einer Vorrichtung zur Erzeugung von elektrischer Energie nach einem der Ansprüche 3 bis 6 angeordnet ist, wobei die Vorrichtung elektrisch mit dem Elektrogerät verbunden ist.

11. Verfahren zur Herstellung einer Vorrichtung nach einem der Ansprüche 3 bis 6, das mindestens einen Schritt umfasst, der darin besteht, ein Hydrogel aus Amyloidfasern zu trocknen, das zwischen einer ersten und einer zweiten Elektrode von einem Elektrodenpaar angeordnet ist, um die Elektroden elektrisch mit dem Hydrogel zu verbinden, damit ein Draht aus Amyloidfasern erhalten wird, der elektrisch mit den Elektroden verbunden ist.

12. Feuchtigkeitssensor, auf Feuchtigkeit reagierender Stromunterbrecher oder Ladegerät, der bzw. das mindestens eine Vorrichtung nach einem der Ansprüche 3 bis 6 umfasst.

## Claims

1. Use of at least one hydronium ion-conducting amyloid fibre, or of at least one wire comprising a plurality of hydronium ion-conducting amyloid fibres, for generating electrical power from a humid surrounding atmosphere.

2. Use according to Claim 1, in which said fibre or wire is electrically connected to a first and a second electrode.

3. Electrical power generation device comprising:
a) at least one hydronium ion-conducting amyloid fibre, or at least one wire comprising a plurality of hydronium ion-conducting amyloid fibres,
b) at least one electrode pair comprising a first electrode and a second electrode, said electrodes being electrically connected to said fibre or wire,
said fibre or wire being intended for exposure, at least in part, to a humid surrounding atmosphere.

4. Device according to Claim 3, comprising a plurality of pairs of first and second electrodes, each of said electrode pairs being electrically connected to a wire or to a plurality of wires.

5. Device according to Claim 3 or 4, in which said fibre is composed of proteins chosen from α-lactalbumin, β-lactoglobulin, lysozyme, or a HET-s protein.

6. Device according to one of Claims 3, 4 or 5, in which the first and/or second electrodes are chosen from gold, silver, platinum, aluminium or carbon electrodes.

7. Use according to Claim 1 or 2, in which said fibre is composed of proteins chosen from α-lactalbumin, β-lactoglobulin, lysozyme, or a HET-s protein.

8. Use according to one of Claims 1, 2 or 7, in which the first and/or second electrodes are chosen from gold, silver, platinum, aluminium or carbon electrodes.

9. Use of a device according to one of Claims 3 to 6, for supplying electrical power to an electrical or electronic apparatus intended to be supplied with electrical power.

10. Process for supplying electrical power to an electrical or electronic apparatus intended to be supplied with electrical power, the process comprising at least one step consisting in exposing to a humid surrounding atmosphere, at least partially, at least one hydronium ion-conducting amyloid fibre, or at least one wire comprising a plurality of hydronium ion-conducting amyloid fibres, said fibre or said wire being arranged in a device for producing electrical power according to any one of Claims 3 to 6, said device being electrically connected to said electrical apparatus.

11. Process for manufacturing a device according to any one of Claims 3 to 6, comprising at least one step of drying a hydrogel of amyloid fibres disposed between a first and a second electrode of an electrode pair to electrically connect said electrodes with the hydrogel to obtain an amyloid fibre wire electrically connected to said electrodes.

12. Moisture sensor, moisture-reactive circuit breaker, or electrical charger comprising at least one device according to one of Claims 3 to 6.
